# EUROPEAN PATENT SPECIFICATION

(11) **EP 4 411 925 B1**
(45) Date of publication and mention of the grant of the patent: **04.11.2026**
(21) Application number: 23803897.0
(22) Date of filing: 12.05.2023
(51) Int. Cl.: H01M 10/0567, H01M 10/0525, H01M 10/42, H01M 4/38, H01M 4/48, H01M 10/0568, H01M 10/0569

(54) **NON-AQUEOUS ELECTROLYTE AND LITHIUM SECONDARY BATTERY INCLUDING THE SAME**
NICHTWÄSSRIGER ELEKTROLYT UND LITHIUMSEKUNDÄRBATTERIE DENSELBEN UMFASSEND
ÉLECTROLYTE NON-AQUEUX ET BATTERIE SECONDAIRE AU LITHIUM LE COMPRENANT

(30) Priority: 13.05.2022 KR 20220059163
(43) Date of publication of application: 07.08.2024
(73) Proprietor: LG Energy Solution, Ltd., Seoul 07335 (KR)
(72) Inventor: CHO, Yoon Gyo, Daejeon 34122 (KR); LEE, Jung Min, Daejeon 34122 (KR); LEE, Chul Haeng, Daejeon 34122 (KR); OH, Jeong Woo, Daejeon 34122 (KR); KIM, Eun Bee, Daejeon 34122 (KR); YEOM, Chul Eun, Daejeon 34122 (KR); HAN, Jung Gu, Daejeon 34122 (KR)
(74) Representative: Hoffmann Eitle
(86) International application number: PCT/KR2023/006514
(87) International publication number: WO 2023/219474

(56) References cited:
- EP-A1- 3 951 990
- WO-A1-2021/166771
- CN-A- 102 569 889
- CN-A- 113 078 357
- JP-A- 2013 157 280
- KR-A- 20190 012 364
- KR-A- 20210 060 330
- KR-A- 20220 000 859
- Q. ZHENG ET AL: "A cyclic phosphate-based battery electrolyte for high voltage and safe operation", NATURE ENERGY, vol. 5, no. 4, 2 March 2020 (2020-03-02), pages 291 - 298, XP037096121, DOI: 10.1038/S41560-020-0567-Z

## Description

### TECHNICAL FIELD

### [Cross-reference to Related Applications]

This application claims priority from Korean Patent Application No. 10-2022-0059163, filed on May 13, 2022.

### [Technical Field]

The present invention relates to a non-aqueous electrolyte and a lithium secondary battery including the same.

### BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

Particularly, high capacity, high output, and long-term life characteristics are becoming important in lithium secondary batteries for automotive applications. In order to increase capacity of the secondary battery, a nickel-rich positive electrode active material having high energy density but low stability may be used, or the secondary battery may be operated at a high voltage.

However, in a case in which the secondary battery is operated under the above conditions, transition metal ions may be dissolved from a surface of a positive electrode while an electrode surface structure or a film formed on the surface of the positive/negative electrode is degraded due to a side reaction caused by degradation of an electrolyte as charge and discharge proceed. As described above, since the dissolved transition metal ions degrade passivation ability of a solid electrolyte interphase (SEI) while being electro-deposited on the negative electrode, there occurs a problem in that the negative electrode is degraded.

This degradation phenomenon of the secondary battery tends to be accelerated when a potential of the positive electrode is increased or when the battery is exposed to a high temperature, and there occurs a problem in that cycle characteristics of the secondary battery are degraded by the degradation phenomenon.

Also, a so-called swelling phenomenon, in which gas is generated to increase a thickness of the battery if a lithium ion battery is continuously used for a long time or is left standing at a high temperature, occurs, wherein it is known that an amount of the gas generated in this case depends on a state of the SEI.

Thus, in order to solve this problem, research and development on a method capable of reducing the swelling phenomenon of the secondary battery and increasing stability at high temperatures by inhibiting the dissolution of the metal ions from the positive electrode and forming a stable SEI film on the negative electrode are being attempted.

EP 3 951 990 A1 discloses a non-aqueous electrolyte solution for a lithium secondary battery, comprising a lithium salt, an organic solvent, and a specific compound as an additive.

CN 113 078 357 A discloses a high-voltage lithium ion battery non-aqueous electrolyte, which comprises an electrolyte lithium salt, a non-aqueous organic solvent and a film-forming additive, and the film-forming additive comprises at least one cyclic phosphate compound with a specific structure.

Qifeng Zhen et al. in NATURE ENERGY, vol. 5, no. 4, 2 March 2020 (2020-03-02), pages 291-298 disclose a cyclic phosphate-based battery electrolyte for high voltage and safe operation.

KR 2021 0060330 A relates to a non-aqueous electrolyte solution for a lithium secondary battery comprising a specific compound as a lithium salt, an organic solvent and an additive.

KR 2022 0000859 A relates to an electrolyte additive, an electrolyte for a battery including the same, and a secondary battery, and more specifically, to an electrolyte additive including a compound in which a group represented by a specific chemical formula is substituted, an electrolyte including the electrolyte additive, and a secondary battery including the same.

KR 2019 0012364 A relates to a non-aqueous electrolyte additive, a non-aqueous electrolyte for a lithium secondary battery comprising the same, and a lithium second battery.

JP 2013 157280 A discloses a nonaqueous electrolyte secondary battery, including a cathode containing a cathode active material which expresses a potential of 4.5 V or higher based on metal lithium, an anode, and a nonaqueous electrolytic solution in which an electrolyte is dissolved in a nonaqueous solvent.

WO 2021/166771 A1 discloses an electrolytic solution for a secondary cell containing an organic solvent and an alkali metal salt, the organic solvent containing a cyclic phosphoric acid ester that has a 5-membered ring structure containing a phosphorus atom and an oxygen atom, and the makeup of the electrolytic solution being such that there are at least five moles of solvent per mole of alkali metal salt.

CN 102 569 889 A discloses a non-aqueous electrolyte containing a lithium salt, an organic solvent and additives, wherein the additives comprise coumarin represented by a specific structural formula, a derivative of the coumarin, and a specific halogenated cyclic carbonate.

### DISCLOSURE OF THE INVENTION

### TECHNICAL PROBLEM

An aspect of the present invention provides a non-aqueous electrolyte in which stability at high temperature is improved by including an additive for a non-aqueous electrolyte which may suppress degradation of a positive electrode, may reduce a side reaction between the positive electrode and the electrolyte, and may form a stable solid electrolyte interphase (SEI) film on a negative electrode.

Another aspect of the present invention provides a lithium secondary battery in which overall performance is improved by improving high-temperature cycle characteristics and high-temperature storage characteristics by including the above non-aqueous electrolyte.

### TECHNICAL SOLUTION

In order to achieve the above object, the present invention provides a non-aqueous electrolyte including a lithium salt, an organic solvent, a compound represented by Formula 1 as a first additive, and a compound represented by Formula 2 as a second additive. 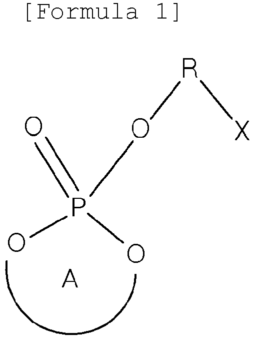 wherein, in Formula 1, A is a cyclic phosphate group having 2 or 3 carbon atoms, R is an alkylene group having 1 to 5 carbon atoms or an alkenylene group having 2 to 5 carbon atoms, and X is a perfluoroalkyl group having 1 to 5 carbon atoms. 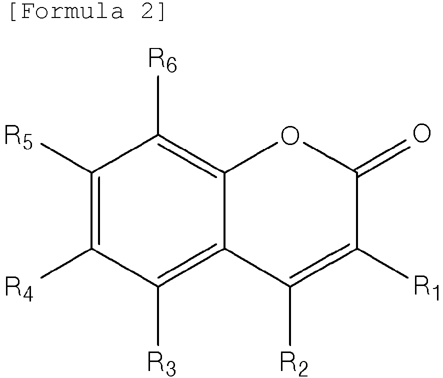 wherein, in Formula 2, R₁ to R₆ are each independently any one selected from the group consisting of hydrogen (H), fluorine (F), an unsubstituted or substituted alkyl group having 1 to 10 carbon atoms, an unsubstituted or substituted alkenyl group having 2 to 10 carbon atoms, an unsubstituted or substituted alkynyl group having 2 to 10 carbon atoms, an unsubstituted or substituted alkoxy group having 1 to 10 carbon atoms, an unsubstituted or substituted alkylcarbonyl group having 2 to 10 carbon atoms, an unsubstituted or substituted alkyl ester group having 1 to 10 carbon atoms, CN, SO₃, and SO₃CF₃, wherein the expression "substituted" denotes that at least one hydrogen bonded to carbon is substituted with: a group consisting of an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Also, the present invention provides a lithium secondary battery including the non-aqueous electrolyte.

### ADVANTAGEOUS EFFECTS

A compound represented by Formula 1, which is provided as a first additive for a non-aqueous electrolyte of the present invention, is a compound based on a cyclic phosphate structure, wherein, since a ring-opening reaction proceeds when a negative electrode SEI layer is formed, it is subjected to poly-phosphoesterification. Accordingly, an elastic and robust solid electrolyte interphase (SEI) film may be formed on a surface of a negative electrode. Thus, degradation of the negative electrode may be prevented by suppressing a decrease in passivation ability of the SEI at high temperatures.

A compound represented by Formula 2, which is provided as a second additive for the non-aqueous electrolyte of the present invention, is a compound based on a coumarin structure, wherein it may form a stable SEI (Solid Electrolyte Interphase) film on the surface of the negative electrode while being rapidly reductively decomposed during charge and discharge. Thus, the degradation of the negative electrode may be prevented by suppressing the decrease in passivation ability of the SEI at high temperatures. Also, a reactive oxygen compound generated from a positive electrode including a high-nickel positive electrode active material is combined with the coumarin structure included in the compound represented by Formula 2 to have an effect of suppressing decomposition of the electrolyte and gas generation.

Furthermore, in the non-aqueous electrolyte including the second additive together with the first additive of the present invention, promotion of the ring-opening reaction of the first additive by free radicals, which are generated during a reduction reaction of the second additive at the negative electrode, assists a film-forming reaction. Since the film, which is formed by interaction between the first additive and the second additive, includes both a polymeric ether structure with high physical durability and a poly-phosphoester structure with excellent ion transport properties on the surface of the negative electrode, it has an effect of improving overall characteristics, such as charge and discharge characteristics and output characteristics, of a lithium secondary battery. Also, since the film, which is formed by the interaction between the first additive and the second additive, has excellent durability, it may well withstand volume expansion of the negative electrode during charge and discharge.

Thus, since an electrode-electrolyte interface, which has high durability and is stable even at high temperatures, may be formed if the non-aqueous electrolyte of the present invention including the first additive and the second additive is used, a lithium secondary battery, in which overall performance is improved by improving high-temperature cycle characteristics and high-temperature storage characteristics, may be achieved.

### MODE FOR CARRYING OUT THE INVENTION

It will be understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-,-CH₂CH₂CH₂-, -CH₂(CH₃)CH-, -CH(CH₃)CH₂-, and -CH(CH₃)CH₂CH₂-.

Furthermore, in the present specification, the expression "alkylene group" denotes a branched or unbranched divalent saturated hydrocarbon group. The expression "alkenylene group" denotes a branched or unbranched divalent unsaturated hydrocarbon group containing a double bond.

Also, an alkyl group or alkylene group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention will be described in more detail.

### Non-aqueous Electrolyte

A non-aqueous electrolyte according to the present invention may include a second additive together with a first additive below.

The non-aqueous electrolyte according to the present invention includes a compound represented by Formula 1 below as a first additive. The compound of Formula 1 below is a compound based on a cyclic phosphate structure, wherein, since a ring-opening reaction proceeds when a negative electrode SEI layer is formed, it is subjected to poly-phosphoesterification. Accordingly, an elastic and robust solid electrolyte interphase (SEI) film may be formed on a surface of a negative electrode.

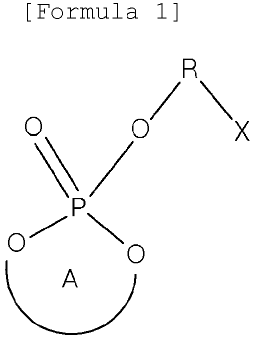

In Formula 1, A is a cyclic phosphate group having 2 or 3 carbon atoms, R is an alkylene group having 1 to 5 carbon atoms or an alkenylene group having 2 to 5 carbon atoms, and X may be a perfluoroalkyl group having 1 to 5 carbon atoms.

In Formula 1, A is a cyclic phosphate group having 2 or 3 carbon atoms, and may preferably be a cyclic phosphate group having 2 carbon atoms. In a case in which A is the cyclic phosphate group having 2 carbon atoms, since ring strain is relatively high, the ring-opening reaction easily occurs.

In Formula 1, R may be an alkylene group having 1 to 5 carbon atoms or an alkenylene group having 2 to 5 carbon atoms, preferably an alkylene group having 1 to 5 carbon atoms, and most preferably an alkylene group having 1 to 3 carbon atoms.

In Formula 1, X may be a perfluoroalkyl group having 1 to 5 carbon atoms and may preferably be CF₃ or CF₂CF₃. Since the additive of Formula 1 includes the perfluoroalkyl group, a LiF inorganic material may be easily generated to form a stable polymer-inorganic material-based SEI layer. As a result, a polymer-inorganic material film rich in inorganic material, such as LiF, may be formed, and there is an effect of suppressing degradation due to an interfacial reaction.

The non-aqueous electrolyte according to the present invention includes a compound represented by Formula 2 below as a second additive.

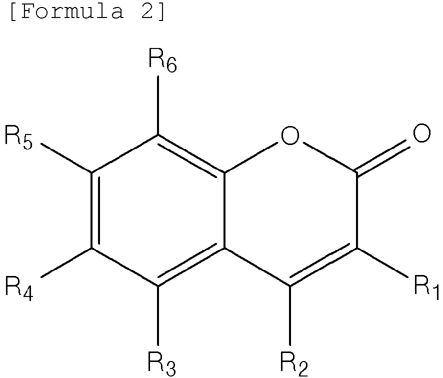

In Formula 2, R₁ to R₆ may each independently be any one selected from the group consisting of hydrogen (H), fluorine (F), an unsubstituted or substituted alkyl group having 1 to 10 carbon atoms, an unsubstituted or substituted alkenyl group having 2 to 10 carbon atoms, an unsubstituted or substituted alkynyl group having 2 to 10 carbon atoms, an unsubstituted or substituted alkoxy group having 1 to 10 carbon atoms, an unsubstituted or substituted alkylcarbonyl group having 2 to 10 carbon atoms, an unsubstituted or substituted alkyl ester group having 1 to 10 carbon atoms, CN, SO₃, and SO₃CF₃, and preferably, R₂, R₃, R₄, and R₆ of Formula 2 may be H. A substituent in Formula 2 may be a substituent such as F, CN, SO₃, SO₃CF₃, and -C≡CH.

The alkylcarbonyl group having 2 to 10 carbon atoms has a structure of -COR', where R' may be an alkyl group having 1 to 9 carbon atoms, an alkenyl group having 2 to 9 carbon atoms, or an alkynyl group having 2 to 9 carbon atoms. The alkyl ester group having 2 to 10 carbon atoms has a structure of -COOR", where R" may be an alkyl group having 1 to 9 carbon atoms, an alkenyl group having 2 to 9 carbon atoms, or an alkynyl group having 2 to 9 carbon atoms.

Also, Formula 2 may include at least one nitrile group or propargyl group. Since the nitrile group or propargyl group is included in addition to a coumarin structure, a dense film may be formed on the electrode, and, as a result, there is the effect of suppressing the degradation due to the interfacial reaction at high temperatures.

Specifically, the compound represented by Formula 2 of the present invention may be any one of compounds represented by Formulae 2a to 2j below.

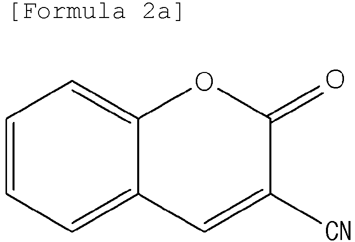

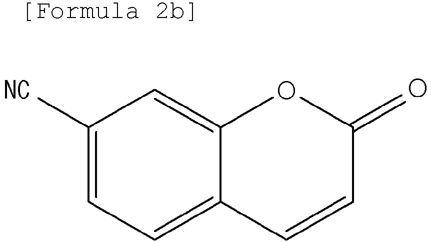

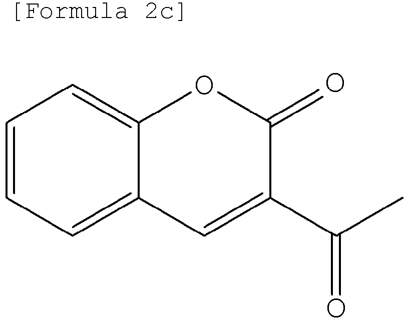

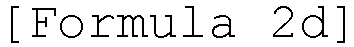

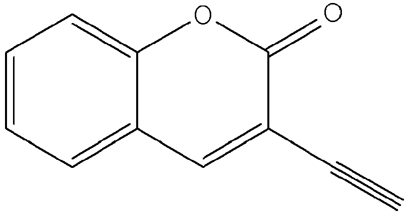

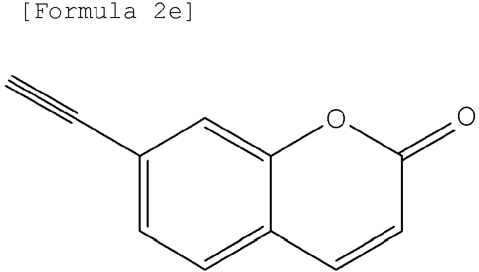

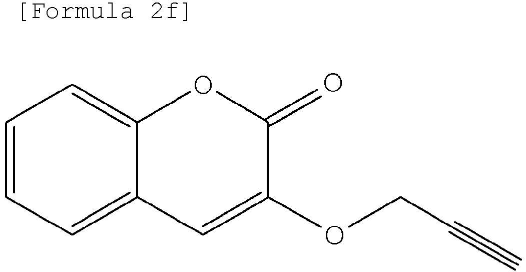

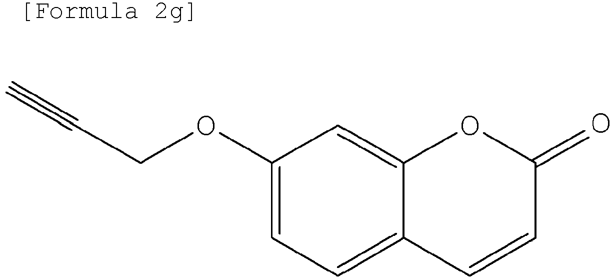

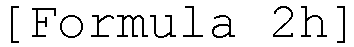

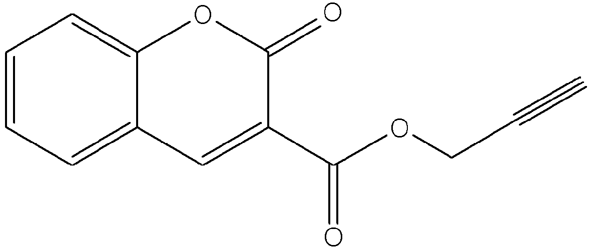

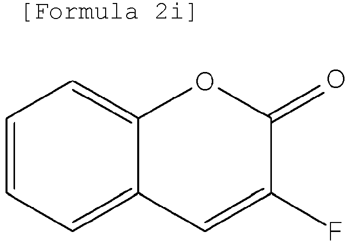

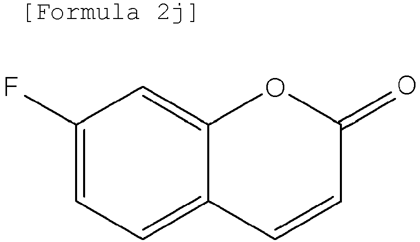

In the non-aqueous electrolyte according to the present invention, the first additive may be included in an amount of 0.01 part by weight to 5 parts by weight, preferably 0.05 part by weight to 3.0 parts by weight, and more preferably 0.10 part by weight to 2.0 parts by weight based on 100 parts by weight of the non-aqueous electrolyte. In a case in which the amount of the first additive satisfies the above range, an effect of forming a film on the negative electrode is sufficient to have an effect of excellent high-temperature storage characteristics and life characteristics at high temperatures.

In the non-aqueous electrolyte according to the present invention, the second additive may be included in an amount of 0.01 part by weight to 5 parts by weight, preferably 0.05 part by weight to 3.0 parts by weight, and more preferably 0.10 part by weight to 2.5 parts by weight based on 100 parts by weight of the non-aqueous electrolyte. In a case in which the amount of the second additive satisfies the above range, the effect of forming a film on the negative electrode is sufficient to have the effect of excellent high-temperature storage characteristics and life characteristics at high temperatures.

In the non-aqueous electrolyte solution of the present invention, the first additive and the second additive may be included in a weight ratio of 1:0.1 to 1:10, preferably 1:0.5 to 1:5, and most preferably 1:1 to 1:4. Since elasticity of the formed SEI film is in an appropriate range, the SEI film may be firmly maintained during charge and discharge or at high temperatures.

The non-aqueous electrolyte according to the present invention may include a lithium salt. The lithium salt is used as an electrolyte salt in a lithium secondary battery, wherein it is used as a medium for transferring ions. Typically, the lithium salt, for example, may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN (SO₂F)₂(lithium bis(fluorosulfonyl) imide; LiFSI), LiN (SO₂CF₂CF₃)₂(lithium bis(perfluoroethanesulfonyl)imide;LiBETI), and LiN(SO₂CF₃)₂(lithium bis(trifluoromethanesulfonyl)imide;LiTFSI) or a mixture of two or more thereof. In addition to these materials, a lithium salt typically used in an electrolyte of a lithium secondary battery may be used without limitation.

The lithium salt may be appropriately changed in a normally usable range, but may be included in a concentration of 0.5 M to 5.0 M, preferably 1.0M to 3.0M, and more preferably 1.2M to 2.0M in the electrolyte to obtain an optimum effect of forming a film for preventing corrosion of the surface of the electrode. In a case in which the concentration of the lithium salt satisfies the above range, since an effect of improving cycle characteristics during high-temperature storage of the lithium secondary battery is sufficient and viscosity of the non-aqueous electrolyte is appropriate, electrolyte impregnability may be improved.

The non-aqueous electrolyte according to the present invention may include an organic solvent. The organic solvent may include at least one organic solvent selected from the group consisting of a cyclic carbonate-based organic solvent, a linear carbonate-based organic solvent, a linear ester-based organic solvent, and a cyclic ester-based organic solvent.

The additive according to the present invention is particularly effective when a cyclic carbonate solvent is used. In a case in which a conventional electrolyte additive is used together with the cyclic carbonate solvent, since an SEI film formed by decomposition of the cyclic carbonate solvent is difficult to be maintained due to a volume change of the negative electrode which occurs during cycles, there has been a problem in that the decomposition of the solvent continues. As a result, there has been a problem in that ionic conductivity of an electrolyte solution is reduced to degrade cycle characteristics. However, in a case in which a combination of the additive according to the present invention with the cyclic carbonate solvent is used, since a robust SEI film may be formed, there is an effect of maintaining high cycle characteristics.

The cyclic carbonate-based organic solvent is an organic solvent which may well dissociate the lithium salt in the electrolyte due to high permittivity as a highly viscous organic solvent, wherein specific examples of the cyclic carbonate-based organic solvent may be at least one organic solvent selected from the group consisting of ethylene carbonate (EC),propylene carbonate (PC), fluoroethylene carbonate (FEC),1,2-butylene carbonate, 2,3-butylene carbonate, 1,2-pentylene carbonate, 2,3-pentylene carbonate, and vinylene carbonate, and, among them, the cyclic carbonate-based organic solvent may include fluoroethylene carbonate (FEC).

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and, among them, the linear carbonate-based organic solvent may include diethyl carbonate (DEC).

Furthermore, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent to prepare an electrolyte having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (Triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile,difluorobenzonitrile, trifluorobenzonitrile, phenylacetonitrile, 2-fluorophenylacetonitrile, and 4-fluorophenylacetonitrile, but is not limited thereto.

Also, the non-aqueous electrolyte of the present invention may further include a known electrolyte additive in the non-aqueous electrolyte, if necessary, in order to prevent the occurrence of collapse of the negative electrode due to decomposition of the non-aqueous electrolyte in a high output environment or to further improve low-temperature high rate discharge characteristics, high-temperature stability, overcharge prevention, and an effect of suppressing battery swelling at high temperature.

Typical examples of the other electrolyte additives may include at least one additive for forming a SEI film which is selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of 1,3-propane sultone (PS),1,4-butane sultone, ethane sultone, 1,3-propene sultone (PRS), 1,4-butene sultone, and 1-methyl-1,3-propenesultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may include tetraphenylborate, lithium oxalyldifluoroborate (LiODFB), and lithium bis(oxalato)borate (LiB(C₂O₄)₂, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, wherein the lithium salt-based compound may include lithium difluorophosphate (LiDFP),LiPO₂F₂, or LiBF₄.

In a case in which, among these other electrolyte additives, a combination of vinylene carbonate (VC),1,3-propane sultone (PS), ethylene sulfate (Esa), and lithium difluorophosphate (LiDFP) is additionally included, a more robust SEI film may be formed on the surface of the negative electrode during an initial activation process of the secondary battery, and high-temperature stability of the secondary battery may be improved by suppressing generation of a gas which may be generated due to the decomposition of the electrolyte at high temperature.

Two or more other electrolyte additives may be mixed and used, and the other electrolyte additives may be included in an amount of 0.050 wt% to 20 wt%, particularly 0.10 wt% to 15 wt%, and preferably 0.30 wt% to 10 wt% based on a total weight of the non-aqueous electrolyte. When the amount of the other electrolyte additives satisfies the above range, an effect of improving ionic conductivity and cycle characteristics is more excellent.

### Lithium Secondary Battery

The present invention also provides a lithium secondary battery including the non-aqueous electrolyte.

Specifically, the lithium secondary battery includes a positive electrode including a positive electrode active material, a negative electrode including a negative electrode active material, a separator disposed between the positive electrode and the negative electrode, and the above-described non-aqueous electrolyte.

In this case, the lithium secondary battery of the present invention may be prepared according to a typical method known in the art. For example, after an electrode assembly is formed by sequentially stacking a positive electrode, a negative electrode, and a separator between the positive electrode and the negative electrode, the electrode assembly is inserted into a battery case, and the lithium secondary battery of the present invention may be prepared by injecting the non-aqueous electrolyte according to the present invention.

### (1) Positive Electrode

The positive electrode may be prepared by coating a positive electrode collector with a positive electrode material mixture slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, or silver may be used.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄), lithium-cobalt-based oxide (e.g., LiCoO₂), lithium-nickel-based oxide (e.g., LiNiO₂), lithium-nickel-manganese-based oxide (e.g., LiNi_{1-Y}Mn_{Y}O₂ (where 0<Y<1), LiMn_{2-Z}Ni_{Z}O₄ (where 0<Z<2)), lithium-nickel-cobalt-based oxide (e.g., LiNi_{1-Y1}Co_{Y1}O₂ (where 0<Y1<1)), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2)), lithium-nickel-manganese-cobalt-based oxide (e.g., Li (NiₚCo_{q}Mnᵣ)O₂ (where 0<p<1, 0<q<1, 0<r<1, and p+q+r=1) or Li (Niₚ₁Co_{q1}Mnᵣ₁)O₄ (where 0<p1<2, 0<q1<2, 0<r1<2, and p1+q1+r1=2)), or lithium-nickel-cobalt-transition metal (M) oxide (e.g., Li (Niₚ₂Co_{q2}Mnᵣ₂Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and S2 are atomic fractions of each independent elements, wherein 0<p2<1, 0<q2<1, 0<r2<1, 0<S2<1, and p2+q2+r2+S2=1)), and any one thereof or a compound of two or more thereof may be included.

Among these materials, in terms of the improvement of capacity characteristics and stability of the battery, the lithium metal oxide may include LiCoO₂, LiMnO₂, LiNiO₂,lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), or lithium nickel cobalt aluminum oxide (e.g., LiNi_{0.8}Co_{0.15}Al_{0.05}O₂), and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of a solid content excluding the solvent in the positive electrode material mixture slurry.

The binder is a component that assists in the binding between the active material and the conductive agent and in the binding with the current collector.

Examples of the binder may be polyvinylidene fluoride, polyvinyl alcohol, starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, or various copolymers.

The binder may commonly be included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The conductive agent is a component for further improving conductivity of the positive electrode active material, wherein it may be added in an amount of 1 wt% to 20 wt% based on the total weight of the solid content in the positive electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a negative electrode material mixture slurry including a negative electrode active material, a binder, a conductive agent, and a solvent on a negative electrode collector, or a graphite electrode formed of carbon (C) or a metal itself may be used as the negative electrode.

For example, in a case in which the negative electrode is prepared by coating the negative electrode material mixture slurry on the negative electrode collector, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, or silver, or an aluminum-cadmium alloy may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, or a nonwoven fabric body.

Also, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), barium (Ba), radium (Ra), germanium (Ge), Al, and tin (Sn) or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O₂ (Me: manganese (Mn), Fe, Pb, or Ge; Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B,Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithium-containing titanium composite oxide (LTO), vanadium oxide, and lithium vanadium oxide.

The additive according to the present invention is particularly effective when Si or SiOₓ (0<x≤2) is used as the negative electrode active material. Specifically, in a case in which a Si-based negative electrode active material is used, degradation of life characteristics is promoted due to extreme volume expansion-contraction during cycles if a robust SEI layer is not formed on the surface of the negative electrode during initial activation. However, since the additive according to the present invention may form an elastic and robust SEI layer, it may improve life characteristics and storage characteristics of a secondary battery using the Si-based negative electrode active material.

The negative electrode active material may be included in an amount of 60 wt% to 99 wt%, preferably 70 wt% to 99 wt%, and more preferably 80 wt% to 98 wt% based on a total weight of solid content in the negative electrode material mixture slurry.

Examples of the binder may be polyvinylidene fluoride (PVDF), polyvinyl alcohol, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer,a styrene-butadiene rubber, a fluoro rubber, or various copolymers thereof. Specifically, styrene-butadiene rubber (SBR)-carboxymethyl cellulose (CMC) may be used in terms of high thickening.

The binder may be commonly included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The conductive agent is a component for further improving conductivity of the negative electrode active material, wherein the conductive agent may be added in an amount of 1 wt% to 20 wt% based on the total weight of the solid content in the negative electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The solvent may include water or an organic solvent, such as NMP(N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

Specifically, a safety reinforced separator (SRS), in which a coating layer containing a ceramic component or a polymer material is formed to secure heat resistance or mechanical strength, may be used as the separators included in the electrode assembly of the present invention.

Specifically, the separators included in the electrode assembly of the present invention include a porous separator support and a porous coating layer entirely coated on one or both surfaces of the separator support, wherein the coating layer may include a mixture of inorganic particles, which are selected from metal oxide, metalloid oxide, metal fluoride, metal hydroxide, and a combination thereof, and a binder polymer that connects and fixes the inorganic particles to each other.

The coating layer may include at least one selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF, as the inorganic particles. Herein, the inorganic particles may improve thermal stability of the separator. That is, the inorganic particles may prevent the separator from shrinking at high temperatures. In addition, the binder polymer may improve mechanical stability of the separator by fixing the inorganic particles.

A shape of the lithium secondary battery of the present invention is not particularly limited, but a cylindrical type using a can, a prismatic type, a pouch type, or a coin type may be used.

Hereinafter, the present invention will be described in detail, according to specific examples. However, the following examples are merely presented to exemplify the present invention, and the scope of the present invention is not limited thereto.

### Examples

### Example 1

### (Preparation of Non-aqueous Electrolyte)

A non-aqueous solvent was prepared by dissolving LiPF₆ in an organic solvent (fluoroethylene carbonate (FEC):diethyl carbonate (DEC)= 10:90 volume ratio) such that a concentration of the LiPF₆ was 1.5 M, and a non-aqueous electrolyte was prepared by adding 1 g of a compound of Formula 1a below and 1 g of the compound of Formula 2a below to 98 g of the non-aqueous solvent.

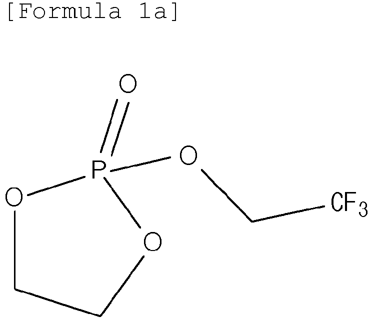

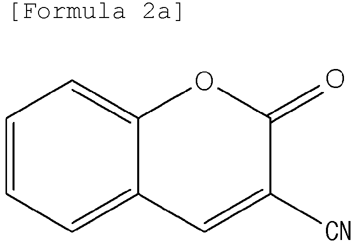

### (Lithium Secondary Battery Preparation)

A positive electrode active material (LiNi_{0.85}Co_{0.05}Mn_{0.08}Al_{0.02}O₂):a conductive agent (carbon nanotubes):a binder (polyvinylidene fluoride) were added in a weight ratio of 97.74:0.7:1.56 to N-methyl-2-pyrrolidone (NMP), as a solvent, to prepare a positive electrode slurry (solid content 75.5 wt%). One surface of a 15µm thick positive electrode collector (Al thin film) was coated with the positive electrode slurry, dried, and roll-pressed to prepare a positive electrode.

A negative electrode active material (silicon; Si):a conductive agent (carbon black):a binder (styrene-butadiene rubber (SBR)-carboxymethyl cellulose (CMC)) were added to N-methyl-2-pyrrolidone (NMP), as a solvent, in a weight ratio of 70:20.3:9.7 to prepare a negative electrode slurry (solid content 26 wt%). One surface of a 15µm thick negative electrode collector (Cu thin film) was coated with the negative electrode slurry, dried, and roll-pressed to prepare a negative electrode.

After disposing a polyolefin-based porous separator coated with Al₂O₃ inorganic particles between the above-prepared positive electrode and negative electrode in a dry room, a secondary battery was prepared by injecting the above-prepared non-aqueous electrolyte.

### Example 2

A secondary battery was prepared in the same manner as in Example 1 except that a non-aqueous electrolyte was prepared by adding 0.2 g of the compound of Formula 1a and 2 g of the compound of Formula 2a to 97.8 g of the non-aqueous solvent prepared in Example 1.

### Example 3

A secondary battery was prepared in the same manner as in Example 1 except that a non-aqueous electrolyte was prepared by adding 1.5 g of the compound of Formula 1a and 0.2 g of the compound of Formula 2a to 98.3 g of the non-aqueous solvent prepared in Example 1.

### Example 4

A secondary battery was prepared in the same manner as in Example 1 except that a non-aqueous electrolyte was prepared by adding 0.5 g of the compound of Formula 1a and 2 g of the compound of Formula 2a to 97.5 g of the non-aqueous solvent prepared in Example 1.

### Example 5

A secondary battery was prepared in the same manner as in Example 1 except that a non-aqueous electrolyte was prepared by adding 1.5 g of the compound of Formula 1a and 2 g of the compound of Formula 2a to 96.5 g of the non-aqueous solvent prepared in Example 1.

### Comparative Example 1

A secondary battery was prepared in the same manner as in Example 1 except that a non-aqueous electrolyte was prepared by using 100 g of the non-aqueous solvent prepared in Example 1.

### Comparative Example 2

A secondary battery was prepared in the same manner as in Example 1 except that a non-aqueous electrolyte was prepared by adding 2 g of the compound of Formula 1a to 98 g of the non-aqueous solvent prepared in Example 1.

### Comparative Example 3

A secondary battery was prepared in the same manner as in Example 1 except that a non-aqueous electrolyte was prepared by adding 2 g of the compound of Formula 2a to 98 g of the non-aqueous solvent prepared in Example 1.

### Experimental Example 1 - High-temperature Cycle Characteristics Evaluation

Cycle characteristics were evaluated for each of the secondary batteries prepared in Examples 1 to 5 and Comparative Examples 1 to 3.

Specifically, after charging of each of the batteries prepared in Examples 1 to 5 and Comparative Examples 1 to 3 at a constant current of 1 C to 4.2 V at 45°C and discharging of each battery at a constant current of 0.5 C to 3.0 V were set as one cycle and 250 cycles of the charging and discharging were performed, capacity retention relative to initial capacity after 1 cycle was measured. The results thereof are presented in Table 1 below.

**[Table 1]**

| | Capacity retention (%) |
|---|---|
| Example 1 | 87.7 |
| Example 2 | 85.4 |
| Example 3 | 83.6 |
| Example 4 | 84.3 |
| Example 5 | 83.7 |
| Comparative Example 1 | 77.8 |
| Comparative Example 2 | 79.6 |
| Comparative Example 3 | 82.5 |

As illustrated in Table 1, since Examples 1 to 5 using a combination of the first additive and the second additive had higher capacity retentions than Comparative Example 1 without using an additive, Comparative Example 2 using only the first additive, and Comparative Example 3 using only the second additive, their life characteristics were excellent.

### Experimental Example 2 - High-temperature Storage Characteristics Evaluation

High-temperature storage characteristics were evaluated for each of the secondary batteries prepared in Examples 1 to 5 and Comparative Examples 1 to 3.

Specifically, after fully charging each of the secondary batteries prepared in Examples 1 to 5 and Comparative Examples 1 to 3 to 4.2 V, each secondary battery was stored at 60°C for 8 weeks.

Before the storage, capacity of the fully charged secondary battery was measured to set it as initial capacity of the secondary battery.

After 8 weeks, capacity of the stored secondary battery was measured to calculate capacity that had been decreased during a storage period of 8 weeks. A percent ratio of the decreased capacity to the initial capacity of the secondary battery was calculated to derive a capacity retention after 8 weeks. The results thereof are presented in Table 2 below.

**[Table 2]**

| | Capacity increase rate (%) |
|---|---|
| Example 1 | 96.8 |
| Example 2 | 94.2 |
| Example 3 | 95.3 |
| Example 4 | 94.2 |
| Example 5 | 91.5 |
| Comparative Example 1 | 85.7 |
| Comparative Example 2 | 90.7 |
| Comparative Example 3 | 86.5 |

As illustrated in Table 2, since Examples 1 to 5 using the combination of the first additive and the second additive had higher capacity retentions after 8 weeks than Comparative Example 1 without using an additive, Comparative Example 2 using only the first additive, and Comparative Example3 using only the second additive, stable performance at high temperature was confirmed.

## Claims

1. A non-aqueous electrolyte comprising:
a lithium salt;
an organic solvent;
a compound represented by Formula 1 as a first additive;
and
a compound represented by Formula 2 as a second additive: 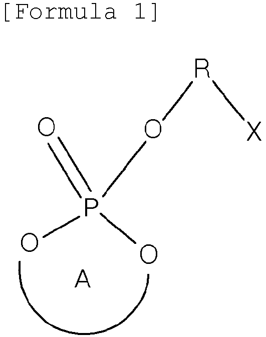
wherein, in Formula 1,
A is a cyclic phosphate group having 2 or 3 carbon atoms,
R is an alkylene group having 1 to 5 carbon atoms or an alkenylene group having 2 to 5 carbon atoms, and
X is a perfluoroalkyl group having 1 to 5 carbon atoms, and 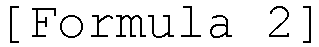 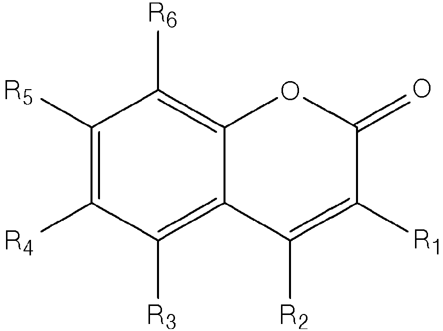
wherein, in Formula 2, R₁ to R₆ are each independently any one selected from the group consisting of hydrogen (H), fluorine (F), an unsubstituted or substituted alkyl group having 1 to 10 carbon atoms, an unsubstituted or substituted alkenyl group having 2 to 10 carbon atoms, an unsubstituted or substituted alkynyl group having 2 to 10 carbon atoms, an unsubstituted or substituted alkoxy group having 1 to 10 carbon atoms, an unsubstituted or substituted alkylcarbonyl group having 2 to 10 carbon atoms, an unsubstituted or substituted alkyl ester group having 1 to 10 carbon atoms, CN, SO₃, and SO₃CF₃,
wherein the expression "substituted" denotes that at least one hydrogen bonded to carbon is substituted with: a group consisting of an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

2. The non-aqueous electrolyte of claim 1, wherein A of Formula 1 is a cyclic phosphate group having 2 carbon atoms.

3. The non-aqueous electrolyte of claim 1, wherein R of Formula 1 is an alkylene group having 1 to 3 carbon atoms.

4. The non-aqueous electrolyte of claim 1, wherein X of Formula 1 is CF₃ or CF₂CF₃.

5. The non-aqueous electrolyte of claim 1, wherein R₂, R₃, R₄, and R₆ of Formula 2 are H.

6. The non-aqueous electrolyte of claim 1, wherein Formula 2 comprises at least one nitrile group.

7. The non-aqueous electrolyte of claim 1, wherein Formula 2 comprises at least one propargyl group.

8. The non-aqueous electrolyte of claim 1, wherein the first additive is included in an amount of 0.01 part by weight to 5 parts by weight based on 100 parts by weight of the non-aqueous electrolyte.

9. The non-aqueous electrolyte of claim 1, wherein the second additive is included in an amount of 0.01 part by weight to 5 parts by weight based on 100 parts by weight of the non-aqueous electrolyte.

10. The non-aqueous electrolyte of claim 1, wherein the first additive and the second additive are included in a weight ratio of 1:0.1 to 1:10.

11. The non-aqueous electrolyte of claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂, and LiN (SO₂CF₃)₂.

12. The non-aqueous electrolyte of claim 1, wherein the lithium salt is included in a concentration of 0.5 M to 5.0 M.

13. The non-aqueous electrolyte of claim 1, wherein the organic solvent comprises at least one organic solvent selected from the group consisting of a cyclic carbonate-based organic solvent, a linear carbonate-based organic solvent, a linear ester-based organic solvent, and a cyclic ester-based organic solvent.

14. A lithium secondary battery comprising:
a positive electrode;
a negative electrode; and
the non-aqueous electrolyte of any one of claims 1 to 13.

15. The lithium secondary battery of claim 14, wherein the negative electrode comprises SiOₓ (0≤x≤2) as a negative electrode active material.

## Patentansprüche

1. Nichtwässriger Elektrolyt, umfassend
ein Lithiumsalz;
ein organisches Lösungsmittel;
eine durch Formel 1 dargestellte Verbindung als erstes Additiv; und
eine durch Formel 2 dargestellte Verbindung als zweites Additiv: 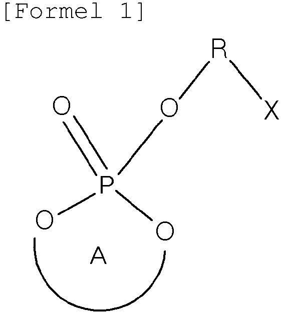
worin in Formel 1
A eine cyclische Phosphatgruppe mit 2 oder 3 Kohlenstoffatomen ist,
R eine Alkylengruppe mit 1 bis 5 Kohlenstoffatomen oder eine Alkenylengruppe mit 2 bis 5 Kohlenstoffatomen ist und
X eine Perfluoralkylgruppe mit 1 bis 5 Kohlenstoffatomen ist, und 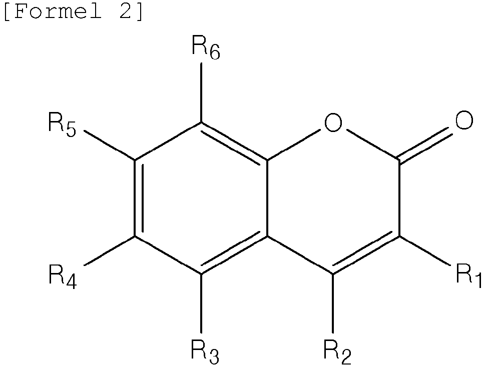
worin in Formel 2
R₁ bis R₆ jeweils unabhängig ausgewählt sind aus der Gruppe bestehend aus Wasserstoff (H), Fluor (F), einer unsubstituierten oder substituierten Alkylgruppe mit 1 bis 10 Kohlenstoffatomen, einer unsubstituierten oder substituierten Alkenylgruppe mit 2 bis 10 Kohlenstoffatomen, einer unsubstituierten oder substituierten Alkinylgruppe mit 2 bis 10 Kohlenstoffatomen, einer unsubstituierten oder substituierten Alkoxygruppe mit 1 bis 10 Kohlenstoffatomen, einer unsubstituierten oder substituierten Alkylcarbonylgruppe mit 2 bis 10 Kohlenstoffatomen, einer unsubstituierten oder substituierten Alkylestergruppe mit 1 bis 10 Kohlenstoffatomen, CN, SO₃ und SO₃CF₃,
wobei der Ausdruck "substituiert" bedeutet, dass mindestens ein an Kohlenstoff gebundenes Wasserstoffatom durch eine Gruppe substituiert ist, die ausgewählt ist aus einer Alkylgruppe mit 1 bis 20 Kohlenstoffatomen, einer Alkenylgruppe mit 2 bis 20 Kohlenstoffatomen, einer Alkinylgruppe mit 2 bis 20 Kohlenstoffatomen, einer Alkoxygruppe mit 1 bis 20 Kohlenstoffatomen, einer Cycloalkylgruppe mit 3 bis 12 Kohlenstoffatomen, einer Cycloalkenylgruppe mit 3 bis 12 Kohlenstoffatomen, einer Heterocycloalkylgruppe mit 3 bis 12 Kohlenstoffatomen, einer Heterocycloalkenylgruppe mit 3 bis 12 Kohlenstoffatomen, einer Aryloxygruppe mit 6 bis 12 Kohlenstoffatomen, einem Halogenatom, einer Fluoralkylgruppe mit 1 bis 20 Kohlenstoffatomen, einer Nitrogruppe, einer Arylgruppe mit 6 bis 20 Kohlenstoffatomen, eine Heteroarylgruppe mit 2 bis 20 Kohlenstoffatomen oder einer Halogenarylgruppe mit 6 bis 20 Kohlenstoffatomen.

2. Nichtwässriger Elektrolyt gemäß Anspruch 1, worin A der Formel 1 eine cyclische Phosphatgruppe mit 2 Kohlenstoffatomen ist.

3. Nichtwässriger Elektrolyt gemäß Anspruch 1, worin R der Formel 1 eine Alkylengruppe mit 1 bis 3 Kohlenstoffatomen ist.

4. Nichtwässriger Elektrolyt gemäß Anspruch 1, worin X der Formel 1 CF₃ oder CF₂CF₃ ist.

5. Nichtwässriger Elektrolyt gemäß Anspruch 1, worin R₂, R₃, R₄ und R₆ der Formel 2 H sind.

6. Nichtwässriger Elektrolyt gemäß Anspruch 1, wobei die Formel 2 mindestens eine Nitrilgruppe umfasst.

7. Nichtwässriger Elektrolyt gemäß Anspruch 1, wobei die Formel 2 mindestens eine Propargylgruppe umfasst.

8. Nichtwässriger Elektrolyt gemäß Anspruch 1, wobei das erste Additiv in einer Menge von 0,01 Gewichtsteilen bis 5 Gewichtsteilen, bezogen auf 100 Gewichtsteile des nichtwässrigen Elektrolyten, enthalten ist.

9. Nichtwässriger Elektrolyt gemäß Anspruch 1, wobei das zweite Additiv in einer Menge von 0,01 Gewichtsteilen bis 5 Gewichtsteilen, bezogen auf 100 Gewichtsteile des nichtwässrigen Elektrolyten, enthalten ist.

10. Nichtwässriger Elektrolyt gemäß Anspruch 1, wobei das erste Additiv und das zweite Additiv in einem Gewichtsverhältnis von 1:0,1 bis 1:10 enthalten sind.

11. Nichtwässriger Elektrolyt gemäß Anspruch 1, wobei das Lithiumsalz mindestens eines ist, das ausgewählt ist aus der Gruppe bestehend aus LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ und LiN(SO₂CF₃)₂.

12. Nichtwässriger Elektrolyt gemäß Anspruch 1, wobei das Lithiumsalz in einer Konzentration von 0,5 M bis 5,0 M enthalten ist.

13. Nichtwässriger Elektrolyt gemäß Anspruch 1, wobei das organische Lösungsmittel mindestens ein organisches Lösungsmittel umfasst, das ausgewählt ist aus der Gruppe bestehend aus einem organischen Lösungsmittel auf Basis eines cyclischen Carbonats, einem organischen Lösungsmittel auf Basis eines linearen Carbonats, einem organischen Lösungsmittel auf Basis eines linearen Esters und einem organischen Lösungsmittel auf Basis eines cyclischen Esters.

14. Lithium-Sekundärbatterie, umfassend
eine positive Elektrode;
eine negative Elektrode; und
den nichtwässrigen Elektrolyten gemäß mindestens einem der Ansprüche 1 bis 13.

15. Lithium-Sekundärbatterie gemäß Anspruch 14, wobei die negative Elektrode SiOₓ (0 ≤ x ≤ 2) als Negativelektrodenaktivmaterial umfasst.

## Revendications

1. Électrolyte non aqueux comprenant :
un sel de lithium ;
un solvant organique ;
un composé représenté par la Formule 1 en tant que premier additif ; et
un composé représenté par la Formule 2 en tant que deuxième additif : 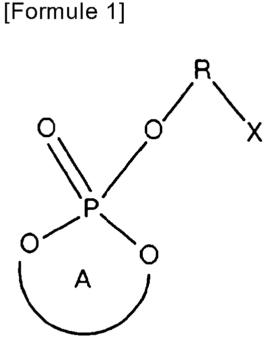
dans lequel, dans la Formule 1,
A est un groupe phosphate cyclique présentant 2 ou 3 atomes de carbone,
R est un groupe alkylène présentant 1 à 5 atomes de carbone ou un groupe alcénylène présentant 2 à 5 atomes de carbone, et
X est un groupe perfluoroalkyle présentant 1 à 5 atomes de carbone, et 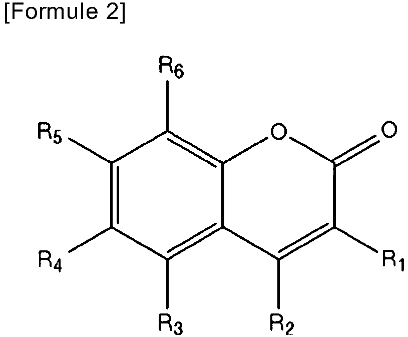
dans lequel, dans la Formule 2,
R₁ à R₆ sont chacun indépendamment un quelconque sélectionné dans le groupe consistant en l'hydrogène (H), le fluor (F), un groupe alkyle non substitué ou substitué présentant 1 à 10 atomes de carbone, un groupe alcényle non substitué ou substitué présentant 2 à 10 atomes de carbone, un groupe alcynyle non substitué ou substitué présentant 2 à 10 atomes de carbone, un groupe alcoxy non substitué ou substitué présentant 1 à 10 atomes de carbone, un groupe alkylcarbonyle non substitué ou substitué présentant 2 à 10 atomes de carbone, un groupe alkylester non substitué ou substitué présentant 1 à 10 atomes de carbone, CN, SO₃ et SO₃CF₃,
dans lequel l'expression « substitué » indique qu'au moins un hydrogène lié au carbone est substitué par : un groupe consistant en un groupe alkyle présentant 1 à 20 atomes de carbone, un groupe alcényle présentant 2 à 20 atomes de carbone, un groupe alcynyle présentant 2 à 20 atomes de carbone, un groupe alcoxy présentant 1 à 20 atomes de carbone, un groupe cycloalkyle présentant 3 à 12 atomes de carbone, un groupe cycloalcényle présentant 3 à 12 atomes de carbone, un groupe hétérocycloalkyle présentant 3 à 12 atomes de carbone, un groupe hétérocycloalcényle présentant 3 à 12 atomes de carbone, un groupe aryloxy présentant 6 à 12 atomes de carbone, un atome d'halogène, un groupe fluoroalkyle présentant 1 à 20 atomes de carbone, un groupe nitro, un groupe aryle présentant 6 à 20 atomes de carbone, un groupe hétéroaryle présentant 2 à 20 atomes de carbone, ou un groupe haloaryle présentant 6 à 20 atomes de carbone.

2. Électrolyte non aqueux selon la revendication 1, dans lequel A de la Formule 1 est un groupe phosphate cyclique présentant 2 atomes de carbone.

3. Électrolyte non aqueux selon la revendication 1, dans lequel R de la Formule 1 est un groupe alkylène présentant 1 à 3 atomes de carbone.

4. Électrolyte non aqueux selon la revendication 1, dans lequel X de la Formule 1 est CF₃ ou CF₂CF₃.

5. Électrolyte non aqueux selon la revendication 1, dans lequel R₂, R₃, R₄ et R₆ de la Formule 2 sont H.

6. Électrolyte non aqueux selon la revendication 1, dans lequel la Formule 2 comprend au moins un groupe nitrile.

7. Électrolyte non aqueux selon la revendication 1, dans lequel la Formule 2 comprend au moins un groupe propargyle.

8. Électrolyte non aqueux selon la revendication 1, dans lequel le premier additif est inclus en une quantité de 0,01 partie en poids à 5 parties en poids sur la base de 100 parties en poids de l'électrolyte non aqueux.

9. Électrolyte non aqueux selon la revendication 1, dans lequel le deuxième additif est inclus en une quantité de 0,01 partie en poids à 5 parties en poids sur la base de 100 parties en poids de l'électrolyte non aqueux.

10. Électrolyte non aqueux selon la revendication 1, dans lequel le premier additif et le deuxième additif sont inclus dans un rapport pondéral de 1:0,1 à 1:10.

11. Électrolyte non aqueux selon la revendication 1, dans lequel le sel de lithium est au moins un sélectionné dans le groupe consistant en LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ et LiN(SO₂CF₃)₂.

12. Électrolyte non aqueux selon la revendication 1, dans lequel le sel de lithium est inclus à une concentration de 0,5 M à 5,0 M.

13. Électrolyte non aqueux selon la revendication 1, dans lequel le solvant organique comprend au moins un solvant organique sélectionné dans le groupe consistant en un solvant organique à base de carbonate cyclique, un solvant organique à base de carbonate linéaire, un solvant organique à base d'ester linéaire et un solvant organique à base d'ester cyclique.

14. Batterie secondaire au lithium comprenant :
une électrode positive ;
une électrode négative ; et
l'électrolyte non aqueux selon l'une quelconque des revendications 1 à 13.

15. Batterie secondaire au lithium selon la revendication 14, dans laquelle l'électrode négative comprend SiOₓ (0≤x≤2) en tant que matériau actif d'électrode négative.
